# EUROPEAN PATENT APPLICATION

(11) **EP 4 521 303 A1**
(43) Date of publication of application: **12.03.2025**
(21) Application number: 24195785.1
(22) Date of filing: 22.08.2024
(51) Int. Cl.: G06N 3/098, G06N 3/10

(54) **INFORMATION PROCESSING APPARATUS, INFORMATION PROCESSING SYSTEM, PROCESSING INFORMATION METHOD, AND CARRIER MEANS**

(30) Priority: 11.09.2023 JP 2023146977
(71) Applicant: Ricoh Company, Ltd., Tokyo 143-8555 (JP)
(72) Inventor: TAKAGI, Satoshi, Tokyo, 143-8555 (JP)
(74) Representative: SSM Sandmair

(57) **Abstract**

An information processing apparatus (10) includes a model acquisition unit (102) configured to acquire a plurality of trained models that are trained respectively using different datasets, a model evaluation unit (104) configured to evaluate each of the plurality of trained models based on an evaluation indicator defined by a user, and a screen output unit (105) configured to output screen data for displaying the evaluation indicator relating to each of the plurality of trained models.

## Description

### BACKGROUND

### Technical Field

The present disclosure relates to an information processing apparatus, an information processing system, an information processing method, and carrier means.

### Related Art

A machine learning approach called federated learning is known. In the federated learning, machine learning is performed while keeping data held by multiple entities such as enterprises localized on each entity, without centralizing the data. The federated learning enables the implementation of a model that takes advantage of data between multiple clients as if the data were linked while ensuring privacy and security.

Japanese Unexamined Patent Application Publication No. 2022-76277 discloses a method for providing data for a learning model based on distributed learning. In the data providing method disclosed in Japanese Unexamined Patent Application Publication No. 2022-76277, a user interface is used that displays an evaluation value based on the accuracy of a model.

In the related art, it is difficult to appropriately evaluate the performance of a model. For example, in the related art, only a general-purpose performance evaluation indicator of a model is displayed, and an evaluation result of data or other related information is not displayed. Accordingly, it is not possible to determine whether a determination regarding the performance of the model is appropriate.

### SUMMARY

An object of an embodiment of the present invention is to output information for appropriately evaluating the performance of a model.

An embodiment of the present disclosure includes an information processing apparatus including a model acquisition unit configured to acquire a plurality of trained models that are trained respectively using different datasets, a model evaluation unit configured to evaluate each of the plurality of trained models based on an evaluation indicator defined by a user, and a screen output unit configured to output screen data for displaying the evaluation indicator relating to each of the plurality of trained models.

An embodiment of the present disclosure includes an information processing system including a first information processing apparatus and a plurality of second information processing apparatuses. The first information processing apparatus and the plurality of second information processing apparatuses are communicable with each other through a network. The first information processing apparatus includes a model acquisition unit configured to acquire a plurality of trained models received from the plurality of the second information processing apparatuses, respectively, a model evaluation unit configured to evaluate each of the plurality of trained models based on an evaluation indicator defined by a user, and a screen output unit configured to output screen data for displaying the evaluation indicator relating to each of the plurality of trained models. Each of the plurality of the second information processing apparatuses includes a model training unit configured to generate a corresponding one of the plurality of trained models using a predetermined dataset, a model transmission unit configured to transmit the corresponding one of the plurality of trained models to the first information processing apparatus, and a display control unit configured to display the evaluation indicator relating to each of the plurality of trained models based on the screen data output from the screen output unit.

An embodiment of the present disclosure includes an information processing method performed by a computer. The method includes acquiring a plurality of trained models that are trained respectively using different datasets, evaluating each of the plurality of trained models based on an evaluation indicator defined by a user, and outputting screen data for displaying the evaluation indicator relating to each of the plurality of trained models.

An embodiment of the present disclosure includes Carrier means carrying computer readable codes for controlling a computer system to carry out a method. The method includes acquiring a plurality of trained models that are trained respectively using different datasets, evaluating each of the plurality of trained models based on an evaluation indicator defined by a user, and outputting screen data for displaying the evaluation indicator relating to each of the plurality of trained models.

According to the one or more embodiments of the present disclosure, information for appropriately evaluating the performance of a model is output.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a block diagram illustrating an example of the overall configuration of a federated learning system according to an embodiment;
FIG. 2 is a block diagram illustrating an example of a hardware configuration of a computer;
FIG. 3 is a block diagram illustrating the functional configuration of the federated learning system according to an embodiment;
FIG. 4 is a sequence diagram illustrating an example of a model application method according to an embodiment;
FIG. 5 is a screen image illustrating an example of a selection screen according to an embodiment; and
FIG. 6 is a screen image illustrating an example of a comparison screen according to an embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of an embodiment of the present disclosure with reference to the drawings. In the drawings, like reference numerals denote like elements, and redundant descriptions thereof may be omitted in the following description.

### Embodiment

One embodiment of the present disclosure is a federated learning system that constructs a machine learning model by federated learning. In the present embodiment, the federated learning system has a function of displaying a performance evaluation indicator of each machine learning model generated by federated learning. A user of the federated learning system can select a machine learning model to be deployed on the basis of displayed performance evaluation indicators of the machine learning models.

In the related art, a method of providing models in the federated learning, only a general-purpose performance evaluation indicator of each of the models is displayed. Accordingly, entities participating in the federated learning have to assess the performance of a model on the basis of only the general-purpose performance evaluation indicator. However, such a general-purpose performance evaluation indicator alone may not be sufficient to properly assess the performance of a model.

On the other hand, displaying the evaluation result of data and/or other related information may enable the entities to appropriately evaluate the performance of a model. However, in the related art, in order to check the evaluation result of data and/or other related information, another tool or means has to be used, which reduces work efficiency.

An object of one embodiment of the present disclosure is to appropriately evaluate the performance of a machine learning model. In the present embodiment, a performance evaluation indicator defined by a user is displayed in addition to a general-purpose performance evaluation indicator. In one aspect, according to the present embodiment, a machine learning model suitable for the use of a user is selected in an efficient manner from among multiple machine learning models generated by federated learning.

### Overall Configuration of Federated Learning System

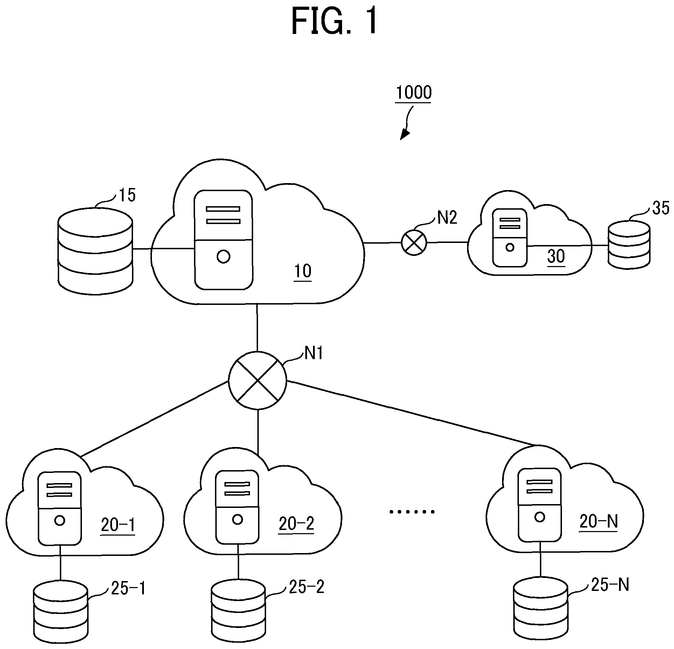

Referring to FIG. 1, a description is given below of the overall configuration of a federated learning system 1000 according to an embodiment. FIG. 1 is a block diagram illustrating an example of the overall configuration of the federated learning system according to an embodiment.

As illustrated in FIG. 1, the federated learning system 1000 includes a central apparatus 10, a central storage device 15, a plurality of client apparatuses 20-1 to 20-N, a plurality of client storage devices 25-1 to 25-N, a client apparatus 30, and a client storage device 35. The federated learning system 1000 is an example of an information processing system. The central apparatus 10 is an example of a first information processing apparatus. The plurality of client apparatuses 20-1 to 20-N is an example of a plurality of second information processing apparatuses. In the following description, the client apparatuses 20-1 to 20-N may be collectively referred to as "client apparatuses 20," each of which may be referred to as a "client apparatus 20" unless distinguished. In the following description, the plurality of client storage devices 25-1 to 25-N may be collectively referred to as "client storage devices 25," each of which may be referred to as a "client storage device 25" unless distinguished. N is an integer of 2 or more. The central apparatus 10, the client apparatuses 20, and the client apparatus 30 are connected to a communication network N1 or a communication network N2. The communication network N1 and the communication network N2 enable the connected apparatus to communicate with one another. The communication network N1 and the communication network N2 may be integrated into one communication network.

Each of the communication network N1 and the communication network N2 is, for example, a wired communication network such as the Internet, a local area network (LAN), or a wide area network (WAN). Alternatively, the communication network N1 may be a wireless communication network such as a wireless LAN or a short-range wireless communication network, or a mobile communication network such as worldwide interoperability for microwave access (WiMAX), long term evolution (LTE), or 5th generation (5G) network.

The central apparatus 10 and the central storage device 15 are electrically connected to each other. The client apparatuses 20 and the client storage devices 25 are electrically connected to each other. The client apparatus 30 and the client storage device 35 are electrically connected to each other. The central storage device 15, the client storage devices 25 and the client storage device 35 may be connected to the communication network N1 or the communication network N2.

The central apparatus 10 is an information processing apparatus that generates a central model. An example of the central apparatus 10 is a computer such as a personal computer, a workstation, or a server. The central apparatus 10 is a server that participates in the federated learning.

The central model is a machine learning model obtained by integrating multiple client models generated by the client apparatuses 20-1 to 20-N, respectively. Examples of the machine learning model include a neural network, a deep neural network, a support vector machine, and random forests.

The central storage device 15 is a storage device that stores the central model. An example of the central storage device 15 is an external storage device such as a disk array or a network attached storage (NAS).

The client apparatus 20 is an information processing apparatus that generates a client model. An example of the client apparatus 20 is a computer. The client apparatus 20 is a node that participates in the federated learning. The client apparatus 20 may execute a predetermined task using a trained central model or a trained client model. In the following description, the trained central model and the trained client model may be collectively referred to as a "trained model."

The client model is a machine learning model generated using client data.

The client data is a dataset for training a client model. In the following description, the client data may be also referred to as "training data." For example, the training data is prepared in advance by a user of the client apparatus 20. The content of the training data varies depending on a task to be executed using the client model.

The client storage device 25 is a storage device that stores the client model and the client data. An example of the client storage device 25 is an external storage device.

The client apparatus 30 is an information processing apparatus that uses the trained model. An example of the client apparatus 30 is a computer. The client apparatus 30 does not participate in the federated learning, and executes a predetermined task using the trained model generated in the federated learning. The client apparatus 30 may be omitted from the federated learning system 1000.

The client storage device 35 is a storage device that stores the trained model. An example of the client storage device 35 is an external storage device. When the client apparatus 30 is not included in the federated learning system 1000, the client storage device 35 is not included in the federated learning system 1000.

The central apparatus 10, the client apparatus 20, or the client apparatus 30 is any apparatus other than a computer as long as the apparatus has a communication capability. Other examples of the central apparatus 10, the client apparatus 20, or the client apparatus 30 include, but not limited to, an output device such as an image forming apparatus (e.g., a printer, a facsimile machine, a multifunction peripheral/product/printer (MFP: digital MFP), a scanner), a projector (PJ), an interactive whiteboard (an electronic whiteboard having mutual communication capability), and a digital signage. Still other examples of the central apparatus 10, the client apparatus 20, or the client apparatus 30 include, but not limited to, a head-up display (HUD), an industrial machine, an imaging device, a sound collecting device, a medical device, a networked home appliance, an automobile (connected car), a laptop personal computer (PC), a mobile phone, a smartphone, a tablet terminal, a game console, a personal digital assistant (PDA), a digital camera, a wearable PC, and a desktop PC.

The configuration of the federated learning system 1000 illustrated in FIG. 1 is one example, and the federated learning system 1000 may have another suitable system configuration. For example, the central apparatus 10, the client apparatus 20, and the client apparatus 30 may be implemented by a single information processing apparatus or may be implemented by a plurality of information processing apparatuses. For example, the central storage device 15 may be built in the central apparatus 10. The client storage device 25 may be built in the client apparatus 20. The client storage device 35 may be built in the client apparatus 30. The federated learning system 1000 may include various types of apparatuses each of which performs at least one of input and output of electronic data, and these apparatuses may use various services provided by the federated learning system 1000.

### Hardware Configuration of Federated Learning System

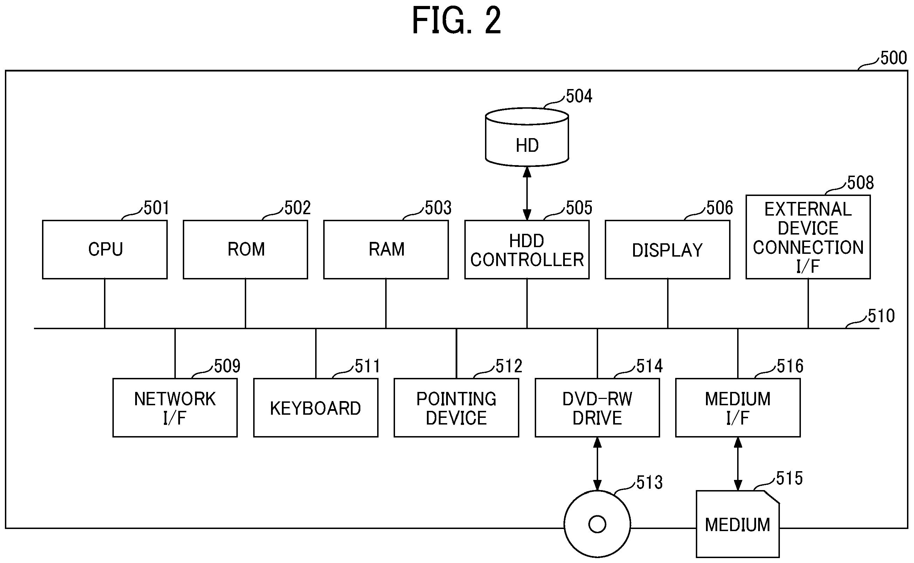

A description is now given of a hardware configuration of each apparatus included in the federated learning system 1000 according to an embodiment with reference to FIG. 2.

### Computer

The central apparatus 10, the client apparatus 20, and the client apparatus 30 according to an embodiment may be implemented by, for example, a computer. FIG. 2 is a block diagram illustrating an example of a hardware configuration of a computer 500.

As illustrated in FIG. 2, the computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disc rewritable (DVD-RW) drive 514, and a medium I/F 516.

The CPU 501 controls the overall operation of the computer 500. The ROM 502 stores a program for controlling the CPU 501, such as an initial program loader (IPL). The RAM 503 is used as a work area for the CPU 501. The HD 504 stores various data such as a program. The HDD controller 505 controls the reading or writing of various data from or to the HD 504 under control of the CPU 501.

The display 506 displays various information such as a cursor, menu, window, characters, or image. The external device connection I/F 508 is an interface that connects the computer 500 to various external devices. Examples of the external devices include, but not limited to, a universal serial bus (USB) memory and a printer. The network I/F 509 is an interface for performing data communication using the communication network N1. The bus line 510 is, for example, an address bus or a data bus, which electrically connects the components illustrated in FIG. 2, such as the CPU 501.

The keyboard 511 is one example of an input device provided with a plurality of keys for allowing a user to input characters, numerals, or various instructions. The pointing device 512 is an example of an input device (input means) used to select or execute various instructions, select an item to be processed, or move a cursor being displayed. The DVD-RW drive 514 controls the reading and writing of various data from and to a DVD-RW 513, which is an example of a removable storage medium. The DVD-RW is merely one example of the removable storage medium. In another example, a digital versatile disc recordable (DVD-R) may be used as the removable storage medium. The medium I/F 516 controls reading or writing (storing) of data from or to a storage medium 515 such as a flash memory.

### Functional Configuration of Federated Learning System

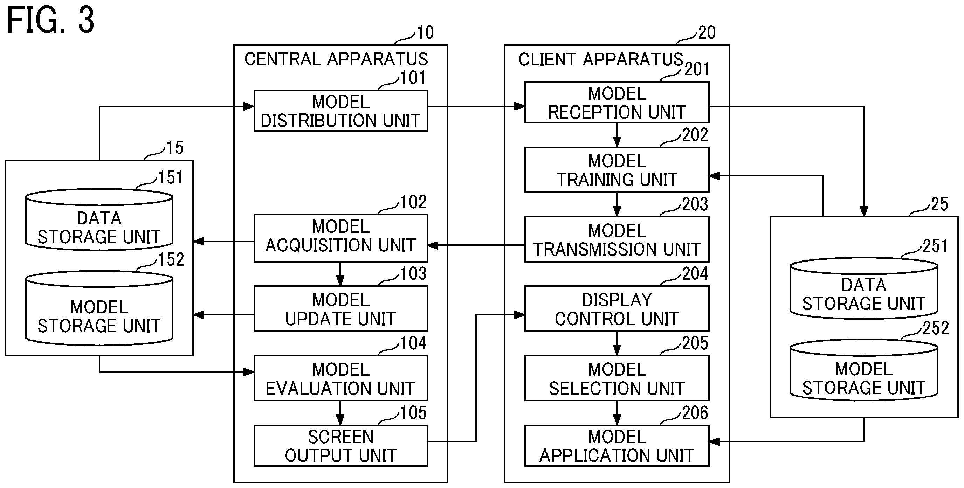

A description is now given of a functional configuration of the federated learning system 1000 according to an embodiment with reference to FIG. 3. FIG. 3 is a block diagram illustrating the functional configuration of the federated learning system 1000 according to an embodiment.

### Central Apparatus

As illustrated in FIG. 3, the central apparatus 10 includes a model distribution unit 101, a model acquisition unit 102, a model update unit 103, a model evaluation unit 104, and a screen output unit 105.

The model distribution unit 101, the model acquisition unit 102, the model update unit 103, the model evaluation unit 104, and the screen output unit 105 are implemented by, for example, processing performed by the CPU 501 according to a program loaded from the HD 504 onto the RAM 503 illustrated in FIG. 2.

The model distribution unit 101 distributes the central model read from the central storage device 15 to the client apparatuses 20-1 to 20-N. The model distribution unit 101 distributes a trained model requested by any one of the client apparatuses 20 to the any one of the client apparatuses 20.

The model acquisition unit 102 acquires trained client models from the client apparatuses 20-1 to 20-N. The model acquisition unit 102 may acquire client models by receiving trained client models transmitted by the client apparatuses 20, respectively. The model acquisition unit 102 may acquire the client models by requesting the client apparatuses 20 to transmit the trained client models.

The model update unit 103 updates the central model stored in the central storage device 15 on the basis of the client models acquired by the model acquisition unit 102.

The model update unit 103 may integrate the client models and store a model obtained by the integration in the central storage device 15 as a new central model.

The model evaluation unit 104 evaluates the performances of the client models acquired by the model acquisition unit 102 and the central model updated by the model update unit 103. The model evaluation unit 104 calculates a general-purpose performance evaluation indicator and a performance evaluation indicator defined by a user for each of the central model and the client model using the central data read from the central storage device 15. In the following description, the general-purpose performance evaluation indicator may be referred to as a "general-purpose evaluation indicator." Further, in the following description, the performance evaluation indicator defined by the user may be referred to as a "custom evaluation indicator."

The general-purpose evaluation indicator is a general-purpose performance evaluation indicator relating to prediction accuracy. When the machine learning model is a classification model, the general-purpose evaluation indicator may be, for example, an accuracy rate, a precision rate, a recall rate, or a F1-score. When the machine learning model is a regression model, the general-purpose evaluation indicator may be, for example, a mean absolute error, a mean squares error, a root mean squared error, or a coefficient of determination.

The custom evaluation indicator is a performance evaluation indicator defined by a user. The custom evaluation indicator may be any indicator as long as it is different from the general-purpose evaluation indicator. For example, the custom evaluation indicator may be an indicator relating to the usage of the machine learning model. The usage of the machine learning model may relate to, for example, a task or work of the user. In other words, the custom evaluation indicator may be a performance evaluation indicator specific to a task or work of a user who uses the machine learning model.

The screen output unit 105 transmits screen data for displaying an evaluation result by the model evaluation unit 104 to the client apparatus 20. The evaluation result includes the general-purpose evaluation indicator and the custom evaluation indicator for each of the central model and the client models. The screen data is, for example, screen data described in hypertext markup language (HTML) and may include an application described in JavaScript^{®}.

### Central Storage Device

As illustrated in FIG. 3, the central storage device 15 includes a data storage unit 151 and a model storage unit 152.

The data storage unit 151 stores central data. The central data includes a dataset (in the following description, may be referred to as "evaluation data") used for evaluating the performance of the central model and the client model. The evaluation data may be a part of the training data stored in the client storage device 25.

The model storage unit 152 stores a central model and client models. The central model stored in the model storage unit 152 is a central model generated by the model update unit 103 of the central apparatus 10. The client models stored in the model storage unit 152 are client models acquired by the model acquisition unit 102 of the central apparatus 10.

### Client Apparatus

As illustrated in FIG. 3, each of the client apparatus 20 includes a model reception unit 201, a model training unit 202, a model transmission unit 203, a display control unit 204, a model selection unit 205, and a model application unit 206.

The model reception unit 201, the model training unit 202, the model transmission unit 203, the display control unit 204, the model selection unit 205, and the model application unit 206 are implemented by, for example, processing performed by the CPU 501 according to a program loaded from the HD 504 to the RAM 503 illustrated in FIG. 2.

The model reception unit 201 receives a central model from the central apparatus 10. The model reception unit 201 receives a trained model selected by the model selection unit 205 from the central apparatus 10.

The model training unit 202 generates a trained client model on the basis of the client data read from the client storage device 25. The model training unit 202 may generate the trained client model by learning the client data with respect to the central model read from the client storage device 25 according to a predetermined learning algorithm.

The model transmission unit 203 transmits the trained client model generated by the model training unit 202 to the central apparatus 10. The model transmission unit 203 may evaluate the trained client model on the basis of the general-purpose evaluation indicator and the custom evaluation indicator, and transmit the client model to the central apparatus 10 together with the evaluation result.

The display control unit 204 presents a selection screen and a comparison screen to a user on the basis of the screen data received from the central apparatus 10. The display control unit 204 may display the selection screen and the comparison screen on the display 506 of the client apparatus 20.

The selection screen is a screen for selecting a trained model to be deployed from multiple trained models. On the selection screen, the general-purpose evaluation indicator and the custom evaluation indicator for each of trained models are displayed.

The comparison screen is a screen for comparing the performances of the trained models. On the comparison screen, prediction results by the trained models are displayed in a manner that the prediction results can be compared with each other.

The model selection unit 205 selects a trained model to be deployed from the trained central model and the trained client models in response to an operation performed on the selection screen by a user. The model selection unit 205 requests the central apparatus 10 to transmit the selected trained model.

The model application unit 206 deploys the trained model selected by the model selection unit 205. The model application unit 206 executes a predetermined task using the deployed trained model.

### Client Storage Device

As illustrated in FIG. 3, the client storage device 25 includes a data storage unit 251 and a model storage unit 252.

The data storage unit 251 stores client data. The client data includes training data used for generating a client model.

The model storage unit 152 stores the client model. The client model is the trained client model generated by the model training unit 202 of the client apparatus 20.

### Processing Procedure for Model Application Method

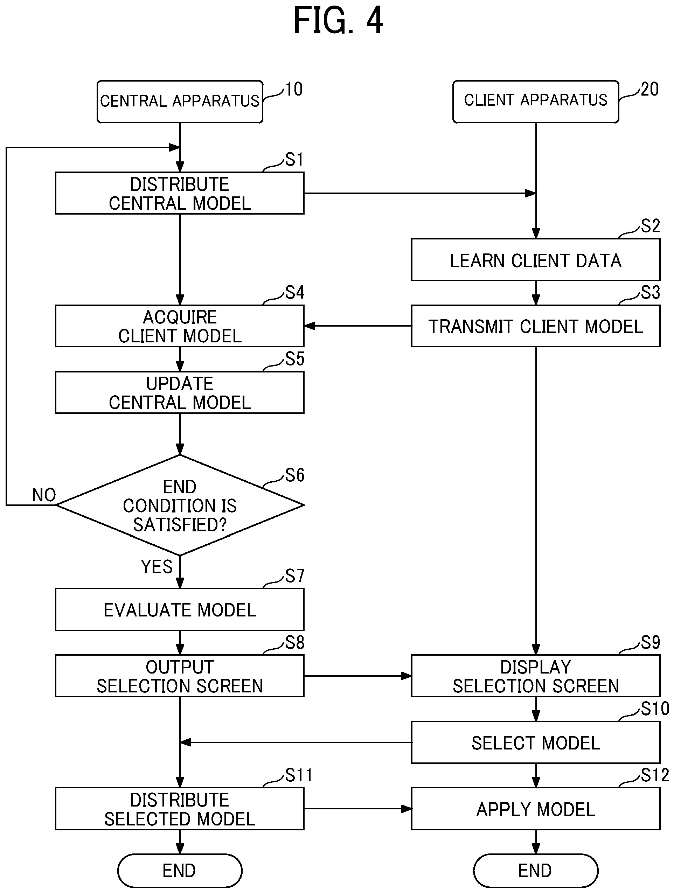

A description is now given of a method of applying a model (an example of an information processing method) performed by the federated learning system 1000 according to an embodiment with reference to FIG. 4 to FIG. 6. FIG. 4 is a sequence diagram illustrating an example of the model application method according to an embodiment. The model application method is an information processing method of deploying a trained model generated by the federated learning and executing a predetermined task using the trained model.

In step S1, the model distribution unit 101 of the central apparatus 10 generates a central model of an initial state and distributes the generated central model to each of the client apparatuses 20-1 to 20-N. The model reception unit 201 of the client apparatus 20 receives the central model of the initial state from the central apparatus 10. The model reception unit 201 stores the received central model in the model storage unit 252 of the client storage device 25.

In step S2, the model training unit 202 of the client apparatus 20 reads the central model from the model storage unit 252 of the client storage device 25. Further, the model training unit 202 reads the client data from the data storage unit 251 of the client storage device 25.

Subsequently, the model training unit 202 learns the client data with respect to the central model according to a predetermined learning algorithm. Thus, a trained client model is generated. The model training unit 202 sends the trained client model to the model transmission unit 203.

In step S3, the model transmission unit 203 of the client apparatus 20 receives the trained client model from the model training unit 202. Subsequently, the model transmission unit 203 transmits the trained client model to the central apparatus 10. Further, the model transmission unit 203 stores the trained client model in the model storage unit 252 of the client storage device 25.

The model transmission unit 203 may evaluate the trained client model using the client data (or a part of the client data) and transmit the trained client model together with the evaluation result. In such a case, the model transmission unit 203 may evaluate the trained client model on the basis of general-purpose evaluation indicator and the custom evaluation indicator.

In step S4, the model acquisition unit 102 of the central apparatus 10 receives the client models from the client apparatuses 20-1 to 20-N, respectively. Subsequently, the model acquisition unit 102 stores the received client models in the model storage unit 152 of the central storage device 15. When the model acquisition unit 102 receives the evaluation results together with the client models, the model acquisition unit 102 may store one or more client models having good evaluation results in the model storage unit 152 of the central storage device 15.

In step S5, the model update unit 103 of the central apparatus 10 reads the client models generated by the client apparatuses 20-1 to 20-N from the model storage unit 152 of the central storage device 15. Subsequently, the model update unit 103 integrates the client models that are read. Thus, a new central model is generated. The model update unit 103 stores the new central model obtained by the integration in the model storage unit 152 of the central storage device 15.

In step S6, the central apparatus 10 determines whether an end condition is satisfied. The end condition is a condition to be satisfied to end the update of the central model. The end condition may be, for example, that the difference between before and after the update has converged, or that the number of updates reaches a predetermined number. When the central apparatus 10 determines that the end condition is satisfied (S6: YES), the operation proceeds to step S7. By contrast, the central apparatus 10 determines that the end condition is not satisfied (S6: NO), the operation returns to step S1.

When the operation returns to step S1, the model distribution unit 101 of the central apparatus 10 distributes the central model updated in the previous step S5 to the client apparatuses 20-1 to 20-N. Subsequently, the federated learning system 1000 performs the processes from step S1 to step S6 again. Thus, the federated learning system 1000 repeatedly updates the central model until the end condition is satisfied.

In step S7, the model evaluation unit 104 of the central apparatus 10 reads the trained model from the model storage unit 252 of the central storage device 15. Subsequently, the model evaluation unit 104 reads the central data from the data storage unit 251 of the central storage device 15.

The model evaluation unit 104 evaluates the trained model using the central data. First, the model evaluation unit 104 inputs the central data to each of the trained models. Each of the trained models outputs a prediction result for the central data. Subsequently, the model evaluation unit 104 calculates the general-purpose evaluation indicator and the custom evaluation indicator on the basis of the prediction result of each of the trained models.

Then, the model evaluation unit 104 sends the evaluation result to the screen output unit 105. The evaluation result includes the general-purpose evaluation indicator and the custom evaluation indicator for each of the trained models. The evaluation result further includes the prediction result by each of the trained models for each of central data.

In step S8, the screen output unit 105 of the central apparatus 10 receives the evaluation result from the model evaluation unit 104. Subsequently, the screen output unit 105 generates screen data for displaying the selection screen and the comparison screen. The general-purpose evaluation indicator and the custom evaluation indicator included in the evaluation result are embedded in the screen data for displaying the selection screen. The prediction result included in the evaluation result is embedded in the screen data for displaying the comparison screen. Then, the screen output unit 105 transmits the generated screen data to the client apparatus 20.

In step S9, the display control unit 204 of the client apparatus 20 receives the screen data from the central apparatus 10. Subsequently, the display control unit 204 displays the selection screen on the display 506 on the basis of the received screen data.

### Selection Screen

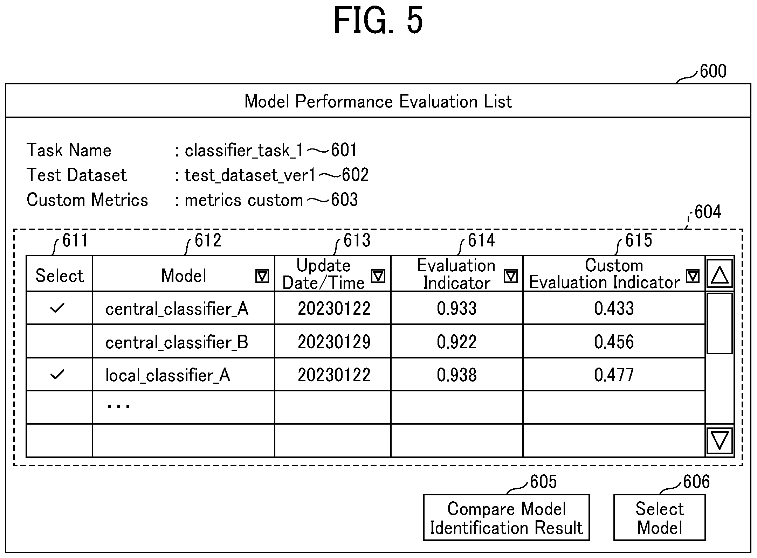

A description is now given of the selection screen according to the present embodiment with reference to FIG. 5. FIG. 5 is a screen image illustrating an example of the selection screen according to the present embodiment.

As illustrated in FIG. 5, the selection screen 600 includes a task name display field 601, a dataset display field 602, an evaluation indicator display field 603, an evaluation result display area 604, a comparison button 605, and a selection button 606. The evaluation result display area 604 includes a model selection field 611, a model display field 612, an update date/time field 613, a general-purpose evaluation indicator field 614, and a custom evaluation indicator field 615.

In the task name display field 601, a name of a task to be executed by the trained model is displayed. In the dataset display field 602, a name of evaluation data is displayed. In the evaluation indicator display field 603, a name of a custom evaluation indicator is displayed. The name of the custom evaluation indicator is defined by a user.

In the evaluation result display area 604, a list of evaluation results of multiple trained models is displayed. In the model display field 612, identification information (e.g., a name, an identifier) that identifies each of the trained model is displayed. In the update date/time field 613, the date/time when each of the trained models was last updated is displayed. In the general-purpose evaluation indicator field 614, a general-purpose evaluation indicator corresponding to each of the trained models is displayed.

In the custom evaluation indicator field 615, a custom evaluation indicator corresponding to each of the trained models is displayed.

In response to pressing the comparison button 605, the comparison screen for comparing the performances of the trained models is displayed. On the comparison screen, only two or more trained models selected in the model selection field 611 of the evaluation result display area 604 may be displayed as items to be compared. When none of the trained models is selected in the model selection field 611 of the evaluation result display area 604, all of the trained models may be displayed as items to be compared.

In response to pressing the selection button 606, the model selection unit 205 receives an operation of selecting a trained model to be deployed. For example, the model selection unit 205 selects a trained model selected in the model selection field 611 as the trained model to be deployed. The selection button 606 may be controlled to be pressed only when one trained model is selected in the model selection field 611.

As described above, the selection screen 600 displays the custom evaluation indicator in addition to the general-purpose evaluation indicator in a manner that the two indicators can be compared with each other for each of the trained models. By referring to the general-purpose evaluation indicator, the user can compare the performances of the trained models with an objective criterion. Further, by referring to the custom evaluation indicator, the user can evaluate the performances of the trained models with a criterion specific to the user's task or work. Furthermore, since the user can refer to the general-purpose evaluation indicator and the custom evaluation indicator on the same screen, multifaceted evaluation on the performances of the trained models is performed efficiently.

### Comparison Screen

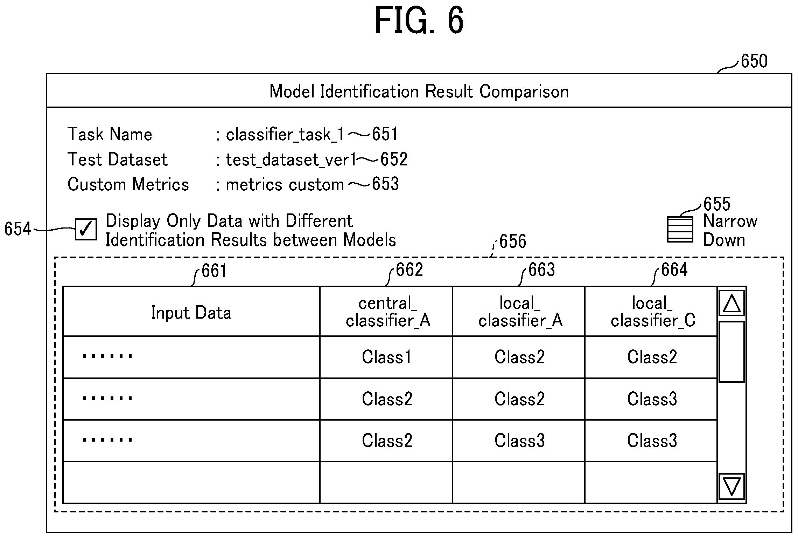

A description is now given of the comparison screen according to the present embodiment with reference to FIG. 6. FIG. 6 is a screen image illustrating an example of the comparison screen according to the present embodiment.

As illustrated in FIG. 6, the comparison screen 650 includes a task name display field 651, a dataset display field 652, an evaluation indicator display field 653, a limitation display selection field 654, a narrow-down button 655, and a prediction result display area 656. The prediction result display area 656 includes a data display field 661 and prediction result fields 662 to 664.

The same description given above of the task name display field 601, the dataset display field 602, and the evaluation indicator display field 603 of the selection screen 600 applies to the task name display field 651, the dataset display field 652, and the evaluation indicator display field 653.

In the prediction result display area 656, a list of prediction results of the trained models to be compared is displayed. When two or more trained models to be compared are selected in the model selection field 611 on the selection screen 600, a list of only the prediction results of the two or more selected trained models may be displayed. The prediction result illustrated in FIG. 6 is an example of a prediction result of a case where the trained model is a classification model that identifies a class of data.

In the prediction result display area 656, a list of prediction results is displayed for each of evaluation data used for evaluation. In the data display field 661, information (e.g., a file name, text, a thumbnail) indicating the content of the evaluation data that is input to the trained model is displayed.

In the prediction result fields 662 to 664, the prediction results of the trained models are displayed, respectively. In the prediction result field 662, the prediction result of the central model is displayed. In the prediction result fields 663 and 664, the prediction results of client models generated respectively by different client apparatuses 20 are displayed. In other words, in the prediction result fields 662 to 664, the prediction results of the trained models for the same evaluation data are displayed in a manner that the prediction results can be compared with each other.

When a user selects the limitation display selection field 654, the prediction result display area 656 displays the prediction results relating only to the evaluation data for which the prediction results differ between the trained models. When the user presses the narrow-down button 655, a screen for entering narrowing-down conditions is displayed. When the narrowing-down condition is entered, the prediction results are narrowed down to a prediction result to be displayed in the prediction result display area 656.

As described above, the comparison screen 650 displays the prediction results of the trained models for the same evaluation data are displayed in a manner that the prediction results can be compared with each other. Further, the comparison screen 650 can display the prediction results relating only to the evaluation data for which the prediction results differ between the trained models. By referring to the comparison screen 650, a user can visually recognize the prediction results of the trained models and intuitively understand the outputs of the trained models and the change in behavior for comparison.

Referring again to FIG. 4, in step S10, the model selection unit 205 of the client apparatus 20 selects a trained model to be deployed from the trained models in response to a user's operation performed on the selection screen 600. Subsequently, the model selection unit 205 transmits a signal that requests transmission of the selected trained model to the central apparatus 10.

In step S11, the model distribution unit 101 of the central apparatus 10 receives the request signal from the client apparatus 20. Subsequently, the model distribution unit 101 reads the trained model indicated by the request signal from the model storage unit 152 of the central storage device 15. Then, the model distribution unit 101 transmits the read trained model to the client apparatus 20.

In step S12, the model application unit 206 of the client apparatus 20 receives the trained model from the central apparatus 10. Subsequently, the model application unit 206 stores the received trained model in the model storage unit 252 of the client storage device 25. The model application unit 206 deploys the received trained model. After deploying the trained model, the model application unit 206 executes a predetermined task or work using the deployed trained model.

The central apparatus 10 according to the present embodiment evaluates each of multiple machine learning models trained with different datasets using an evaluation indicator defined by a user, and outputs screen data for displaying the evaluation indicator relating to each or the machine learning models. The user can compare the performances of the machine learning models on the basis of the evaluation indicator defined by the user. In one aspect, according to the present embodiment, the performance of a machine learning model is evaluated appropriately.

The evaluation indicator may be an indicator relating to the usage of the machine learning model. The evaluation indicator may be an indicator relating to a task or work of the user. In one aspect, according to the present embodiment, a machine learning model suitable for the usage of the machine learning model or the task or work of the user is selected.

The screen data may display a general-purpose evaluation indicator indicating the prediction accuracies of the machine learning models and an evaluation indicator defined by the user in a manner that the two indicators can be compared with each other. In one aspect, according to the present embodiment, a machine learning model is evaluated efficiently in consideration of both a general-purpose evaluation indicator and an evaluation indicator defined by a user.

The central apparatus 10 may output screen data for displaying the prediction results of respective machine learning models for the same data. Such screen data is an example of second screen data. The central apparatus 10 may output screen data for displaying prediction results of only data for which prediction results differ between machine learning models. In one aspect, according to the present embodiment, the performances of machine learning models are efficiently evaluated on the basis of data for which prediction results are different.

The central apparatus 10 may display the prediction results of machine learning models selected by the user. When promising models are determined in advance among multiple machine learning models, it is efficient to compare only those models. Thus, according to the present embodiment, the performances of machine learning models are compared efficiently.

The functionality of the elements disclosed herein may be implemented using circuitry or processing circuitry which includes general purpose processors, special purpose processors, integrated circuits, application-specific integrated circuits (ASICs), digital signal processors (DSPs), field-programmable gate arrays (FPGAs), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

The apparatuses or devices described in one or more embodiments are just one example of plural computing environments that implement the one or more embodiments disclosed herein, n some embodiments, the central apparatus 10 or the client apparatus 20 includes multiple computing devices, such as a server cluster. The multiple computing devices communicate with one another through any type of communication link including, for example, a network or a shared memory, and perform the processes described in the present disclosure.

Aspects of the present disclosure are, for example, as follows.

### Aspect 1

According to Aspect 1, an information processing apparatus includes a model acquisition unit configured to acquire a plurality of trained models that are trained respectively using different datasets. The information processing apparatus includes a model evaluation unit configured to evaluate each of the plurality of trained models based on an evaluation indicator defined by a user. The information processing apparatus includes a screen output unit configured to output screen data for displaying the evaluation indicator relating to each of the plurality of trained models.

### Aspect 2

According to Aspect 2, in the information processing apparatus of Aspect 1, the evaluation indicator is an indicator relating to a usage of the plurality of trained models.

### Aspect 3

According to Aspect 3, in the information processing apparatus of Aspect 2, the usage is a usage relating to a task or work of the user.

### Aspect 4

According to Aspect 4, in the information processing apparatus of any one of Aspects 1 to 3, the screen data displays a general-purpose evaluation indicator indicating a prediction accuracy of each of the plurality of trained models and the evaluation indicator in a manner that the general-purpose evaluation indicator and the evaluation indicator can be compared with each other.

### Aspect 5

According to Aspect 5, in the information processing apparatus of any one of Aspects 1 to 4, the screen output unit is further configured to output second screen data for displaying prediction results of the plurality of trained models for the same data.

### Aspect 6

According to Aspect 6, in the information processing apparatus of Aspect 5, the second screen data displays one or more of the prediction results relating only to the data for which the prediction results differ between the plurality of trained models.

### Aspect 7

According to Aspect 7, in the information processing apparatus of Aspect 5 or 6, the second screen data displays one or more of the prediction results of one or more of the plurality of trained models selected by the user.

### Aspect 8

According to Aspect 8, an information processing system includes a first information processing apparatus and a plurality of second information processing apparatuses. The first information processing apparatus and the plurality of second information processing apparatuses are communicable with each other through a network. The first information processing apparatus includes a model acquisition unit configured to acquire a plurality of trained models received from the plurality of the second information processing apparatuses, respectively. The first information processing apparatus includes a model evaluation unit configured to evaluate each of the plurality of trained models based on an evaluation indicator defined by a user. The first information processing apparatus includes a screen output unit configured to output screen data for displaying the evaluation indicator relating to each of the plurality of trained models. Each of the plurality of the second information processing apparatuses includes a model training unit configured to generate a corresponding one of the plurality of trained models using a predetermined dataset. Each of the plurality of the second information processing apparatuses includes a model transmission unit configured to transmit the corresponding one of the plurality of trained models to the first information processing apparatus. Each of the plurality of the second information processing apparatuses includes a display control unit configured to display the evaluation indicator relating to each of the plurality of trained models based on the screen data.

### Aspect 9

According to Aspect 9, an information processing method performed by a computer includes acquiring a plurality of trained models that are trained respectively using different datasets. The information processing method includes evaluating each of the plurality of trained models based on an evaluation indicator defined by a user. The information processing method includes outputting screen data for displaying the evaluation indicator relating to each of the plurality of trained models.

### Aspect 10

According to Aspect 10, a program stores instructions which, when executed by a computer, causes the computer to perform a method including acquiring a plurality of trained models that are trained respectively using different datasets, evaluating each of the plurality of trained models based on an evaluation indicator defined by a user, and outputting screen data for displaying the evaluation indicator relating to each of the plurality of trained models.

Although some embodiments of the present disclosure have been described in detail above, any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (10), comprising:
a model acquisition unit (102) configured to acquire a plurality of trained models that are trained respectively using different datasets;
a model evaluation unit (104) configured to evaluate each of the plurality of trained models based on an evaluation indicator defined by a user; and
a screen output unit (105) configured to output screen data for displaying the evaluation indicator relating to each of the plurality of trained models.

2. The information processing apparatus (10) of claim 1, wherein the evaluation indicator is an indicator relating to a usage of the plurality of trained models.

3. The information processing apparatus (10) of claim 2, wherein the usage is a usage relating to a task or work of the user.

4. The information processing apparatus (10) of any one of claims 1 to 3, wherein the screen data displays a general-purpose evaluation indicator indicating a prediction accuracy of each of the plurality of trained models and the evaluation indicator in a manner that the general-purpose evaluation indicator and the evaluation indicator can be compared with each other.

5. The information processing apparatus (10) of any one of claims 1 to 4, wherein the screen output unit (105) is further configured to output second screen data for displaying prediction results of the plurality of trained models for the same data.

6. The information processing apparatus (10) of claim 5, wherein the second screen data displays one or more of the prediction results relating only to the same data for which the prediction results differ between the plurality of trained models.

7. The information processing apparatus of claim 5 or 6, wherein the second screen data displays one or more of the prediction results of one or more of the plurality of trained models selected by the user.

8. An information processing system (1000), comprising:
a first information processing apparatus (10); and
a plurality of second information processing apparatuses (20), the first information processing apparatus (10) and the plurality of second information processing apparatuses (20) being communicable with each other through a network,
the first information processing apparatus (10) including:
a model acquisition unit (102) configured to acquire a plurality of trained models received from the plurality of the second information processing apparatuses (20), respectively;
a model evaluation unit (104) configured to evaluate each of the plurality of trained models based on an evaluation indicator defined by a user; and
a screen output unit (105) configured to output screen data for displaying the evaluation indicator relating to each of the plurality of trained models,
each of the plurality of the second information processing apparatuses (20) including:
a model training unit (202) configured to generate a corresponding one of the plurality of trained models using a predetermined dataset;
a model transmission unit (203) configured to transmit the corresponding one of the plurality of trained models to the first information processing apparatus; and
a display control unit (204) configured to display the evaluation indicator relating to each of the plurality of trained models based on the screen data output from the screen output unit (104).

9. An information processing method performed by a computer, the method comprising:
acquiring (S4) a plurality of trained models that are trained respectively using different datasets;
evaluating (S7) each of the plurality of trained models based on an evaluation indicator defined by a user; and
outputting (S8) screen data for displaying the evaluation indicator relating to each of the plurality of trained models.

10. Carrier means carrying computer readable codes for controlling a computer system to carry out a method comprising:
acquiring (S4) a plurality of trained models that are trained respectively using different datasets;
evaluating (S7) each of the plurality of trained models based on an evaluation indicator defined by a user; and
outputting (S8) screen data for displaying the evaluation indicator relating to each of the plurality of trained models.
